(19) Europäisches Patentamt / European Patent Office / Office européen des brevets

(11) **EP 3 174 373 B1**

(12) **FASCICULE DE BREVET EUROPEEN**

(45) Date de publication et mention de la délivrance du brevet:
**25.07.2018 Bulletin 2018/30**

(51) Int Cl.:
**H05H 1/34** *(2006.01)*      **B23K 10/00** *(2006.01)*

(21) Numéro de dépôt: **16197093.4**

(22) Date de dépôt: **03.11.2016**

(54) **TORCHE À PLASMA D'ARC AVEC ÉLECTRODE EN TUNGSTÈNE**

LICHTBOGENPLASMABRENNER MIT WOLFRAM-ELEKTRODE

PLASMA ARC TORCH WITH TUNGSTEN ELECTRODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.11.2015 FR 1561308**

(43) Date de publication de la demande:
**31.05.2017 Bulletin 2017/22**

(73) Titulaire: **AIR LIQUIDE WELDING FRANCE
75007 Paris (FR)**

(72) Inventeurs:
• **RENAULT, Thierry
  95640 MARINES (FR)**
• **UHLIG, Peter
  95160 MONTMORENCY (FR)**
• **BOSELLI, Marco
  40125 Bologna (IT)**
• **COLOMBO, Vittorio
  40023 Castel Guelfodi Bologna (IT)**

(74) Mandataire: **Knauer, Joachim
  Grosse - Schumacher - Knauer - von Hirschhausen
  Patent- und Rechtsanwälte
  Frühlingstrasse 43 A
  45133 Essen (DE)**

(56) Documents cités:
WO-A1-99/53734      FR-A1- 2 450 548
US-A- 4 163 891      US-A1- 2008 237 202

**Description**

L'invention concerne une torche à plasma d'arc avec électrode en tungstène ainsi qu'un procédé de coupage d'une pièce métallique, avantageusement d'une pièce en acier doux, mettant en oeuvre ladite torche.

Le coupage par plasma d'arc est un procédé permettant de couper des pièces formées de matériaux conducteurs électriquement, en particulier des pièces formées de matériaux métalliques tels l'acier doux, l'acier inoxydable, l'aluminium et ses alliages. On utilise pour cela un arc électrique établi entre l'électrode d'une torche à plasma d'arc, faisant office de cathode, et la pièce à couper, faisant office d'anode. L'électrode et la pièce à couper sont reliées électriquement à un générateur de courant électrique.

L'établissement de l'arc électrique entre l'électrode de la torche et la pièce à couper est réalisé par l'intermédiaire d'un flux de gaz plasmagène alimentant la chambre d'arc de la torche à plasma d'arc, c'est-à-dire le volume compris entre l'électrode et une tuyère agencée à l'extrémité de la torche. Le gaz plasmagène est ionisé dans l'arc électrique et circule jusqu'au canal de la tuyère dans lequel s'opère la constriction de l'arc. Il s'ensuit l'éjection par la tuyère d'un jet de plasma d'arc dont la forte densité de puissance permet de fournir la chaleur nécessaire à la fusion du matériau constitutif de la pièce à découper.

Le type de gaz plasmagène utilisé dépend de la nature du matériau à couper. Les gaz oxydants, en particulier l'oxygène, offrent les meilleures performances, en termes de vitesse et de qualité de coupe, sur les pièces en acier doux. Au contraire, l'utilisation de gaz non-oxydants, tels l'azote, l'argon, l'hydrogène ou leurs mélanges, est préférée pour couper les pièces en acier inoxydable et les alliages légers, par exemple les alliages base aluminium.

L'électrode d'une torche à plasma d'arc est formée d'un matériau thermo-émissif utilisé comme émetteur d'électrons. En général, l'électrode comprend un corps en matériau conducteur thermiquement, typiquement du cuivre, muni en son extrémité d'un insert formé du matériau thermo-émissif.

L'émission d'électrons par l'électrode est du type thermo-ionique. La densité de courant thermo-ionique J, exprimée en $A.m^{-2}$, est décrite par la formule de Richardson-Dushman, à savoir :

$$J = A \times T^2 \times \exp{(W/kT)},$$

où A (exprimée en $A.cm^{-2}.K^{-2}$) est la constante de Richardson du matériau, T (exprimée en kelvins) est la température du métal thermo-émissif, W est la fonction de travail du métal (exprimée en électronvolts) et k est la constante de Boltzmann ($1.38 \times 10^{-23}$ $J.K^{-1}$). Ainsi, plus la température du matériau est élevée, plus l'émission d'électrons est importante.

Un matériau thermo-émissif offrira donc une résistance à l'usure d'autant meilleure que son travail de sortie est faible et que ses températures de fusion et de vaporisation sont élevées.

Le choix du tungstène est ainsi privilégié du fait de ses températures de fusion et de vaporisation élevées, respectivement de l'ordre de 3693 K et 5933 K, et de sa fonction de travail de l'ordre de 2.63 eV ($4.21 \times 10^{-19}$ J).

Toutefois, l'utilisation d'électrodes en tungstène avec un gaz plasmagène oxydant est à proscrire à cause de leur détérioration rapide sous atmosphère oxydante. En effet, la présence d'oxygène dans le gaz plasmagène entraîne la formation d'un oxyde à bas point de sublimation sur l'électrode en tungstène et engendre une détérioration accélérée de celle-ci.

De là, il est d'usage de limiter l'utilisation d'électrodes en tungstène au coupage de pièces en acier inoxydable et en alliages légers sous gaz plasmagène non-oxydant, et de privilégier l'utilisation d'électrodes en hafnium pour le coupage de pièces en acier doux sous gaz plasmagène oxydant.

Par « acier doux », également appelé « acier C-Mn» on entend tout acier non-allié ou faiblement allié, de préférence un acier dont les teneurs en carbone et en manganèse sont inférieures à 2% en poids et les teneurs en les autres éléments d'alliage éventuellement présents sont inférieures à 5% en poids.

Cependant, la durée de vie des électrodes en hafnium utilisées avec gaz plasmagène oxydant est nettement inférieure à celle des électrodes en tungstène utilisées avec gaz plasmagène non-oxydant, du fait de la température de fusion plus faible de l'hafnium, de l'ordre de 2506 K.

Afin d'augmenter la durée de vie des électrodes lors du coupage de pièces en acier doux, il a été proposé plusieurs solutions mais aucune ne donne entière satisfaction.

Ainsi, le document US-A-4,163,891 divulgue une torche à plasma d'arc comprenant une électrode en tungstène autour de laquelle est arrangée une série de trois tuyères. L'électrode est protégée par un flux d'argon qui est ensuite évacué hors de la torche par un dispositif de purge. Un flux d'oxygène est distribué vers le canal d'éjection de la tuyère située en regard de la pièce à couper. Toutefois, cette solution conduit à une torche de structure trop complexe pour pouvoir être mise en oeuvre au plan industriel. En outre, la distance entre l'électrode formant cathode et la tuyère formant anode se trouve considérablement augmentée. Ceci peut induire une tension d'arc trop élevée ainsi que des phénomènes de double arc (en anglais « *double arcing* »), ce qui dégrade les performances de coupe et augmente le risque de destruction de la tuyère. De plus, le document US-A-4,163,891 vise essentiellement à utiliser de l'oxygène pour couper les pièces en acier doux à haute vitesse et meilleure qualité et ne s'intéresse pas à la quantité d'oxygène présent autour de l'électrode, due à la turbulence de l'écoulement d'oxygène et à sa rétrodiffusion vers l'électrode. Or, la présence d'oxygène à proximité de l'électrode en tungstène, même en faible quantité (typiquement au-dessus de 0.05%), a un effet adverse sur sa durée de vie.

Par ailleurs, les documents EP-A-0114521 et WO-A-99/53734 enseignent de faire circuler un flux de gaz non-oxydant autour de l'électrode en tungstène, jusqu'au canal d'éjection de la tuyère, et d'alimenter ladite tuyère avec un flux de gaz oxydant.

Bien qu'empêchant l'érosion accélérée de l'électrode, cette solution n'est pas idéale puisque le gaz éjecté par la tuyère consiste en un mélange de gaz non-oxydant et de gaz oxydant (typiquement un mélange contenant seulement 40 % d'oxygène), ce qui n'est pas suffisant pour garantir de bonnes performances de coupe sur les pièces en acier doux. Ainsi, on constate une baisse de la vitesse de coupe à mettre en oeuvre pour obtenir une coupe sans bavure. De plus, cette réduction de vitesse conduit à la formation d'un arrondi au niveau de l'arête supérieure de la pièce découpée. Cette baisse de vitesse de coupe et de qualité conduit à une augmentation du coût de la pièce produite, du fait notamment de la durée plus longue pour découper la pièce et des reprises des dimensions géométriques de la pièce à réaliser avant insertion dans un ensemble mécanosoudé.

Le problème qui se pose est donc de pallier tout ou partie des inconvénients mentionnés ci-dessus, notamment de proposer une torche à plasma dont l'électrode présente une durée de vie améliorée et permettant d'obtenir de bonnes performances de coupe sur les pièces en acier doux, et ce sans complexifier de façon excessive la structure de la torche ni augmenter la distance séparant l'électrode de la tuyère, en comparaison avec une torche à plasma d'arc selon l'art antérieur.

La solution de l'invention est alors une torche à plasma d'arc comprenant :des moyens d'alimentation en gaz oxydant,

- des moyens d'alimentation en gaz non-oxydant,
- une électrode et une première tuyère délimitant une chambre d'arc, l'électrode étant formée au moins en partie de tungstène,
- un premier passage de gaz agencé entre l'électrode et la première tuyère et permettant de distribuer le gaz oxydant dans la chambre d'arc,
- un deuxième passage de gaz permettant de distribuer, en amont du premier passage de gaz, le gaz non-oxydant dans la chambre d'arc
- un troisième passage de gaz agencé entre le premier passage de gaz et le deuxième passage de gaz et permettant d'évacuer le gaz non-oxydant de la chambre d'arc,

caractérisée en ce que le deuxième passage de gaz est aménagé au sein de l'électrode.

Par ailleurs, selon le mode de réalisation considéré, la torche de l'invention peut comprendre l'une ou plusieurs des caractéristiques suivantes :

- l'électrode comprend une partie centrale et une paroi périphérique formant manchon autour de ladite partie centrale, la partie centrale et la paroi périphérique délimitant le deuxième passage de gaz.
- la partie centrale et la paroi périphérique sont formées d'une même pièce.
- la torche comprend une deuxième tuyère agencée entre l'électrode et la première tuyère, le premier passage de gaz étant délimité par la première tuyère et la deuxième tuyère et le troisième passage de gaz étant délimité par l'électrode et la deuxième tuyère.
- la partie centrale de l'électrode comprend une surface d'extrémité agencée en regard de la première tuyère, la surface d'extrémité étant formée au moins en partie de tungstène.
- la paroi périphérique de l'électrode s'étend dans la chambre d'arc en formant saillie par rapport à la surface d'extrémité de l'électrode.
- la paroi périphérique de l'électrode forme saillie d'une distance non-nulle par rapport à la surface d'extrémité de l'électrode, de préférence une distance d'au moins 0,5 mm, de préférence encore une distance inférieure ou égale à 3 mm.
- la première tuyère comprend un premier orifice d'entrée de gaz ayant un premier diamètre, la deuxième tuyère comprend un deuxième orifice ayant un deuxième diamètre et la paroi périphérique comprend un troisième orifice ayant un troisième diamètre et débouchant entre la surface d'extrémité et le deuxième orifice, ledit deuxième diamètre étant inférieur audit troisième diamètre.
- le deuxième diamètre est inférieur au troisième diamètre d'un facteur compris entre 0,5 et 0,95, de préférence le deuxième diamètre est compris entre 4.5 et 3 mm.

- les moyens d'alimentation en gaz oxydant comprennent un premier diffuseur de gaz agencé en amont du premier passage de gaz.
- le premier diffuseur de gaz est traversé par au moins un premier conduit formant un angle $\alpha$ avec l'axe de symétrie transverse dudit premier diffuseur de gaz, l'angle $\alpha$ étant compris entre 0 et 50 °, de préférence supérieur ou égal à 5° et inférieur ou égal à 45 °.
- les moyens d'alimentation en gaz non-oxydant comprennent un deuxième diffuseur de gaz agencé en amont du deuxième passage de gaz.

  le deuxième diffuseur de gaz est traversé par au moins un deuxième conduit formant un angle $\beta$ avec l'axe de symétrie transverse dudit deuxième diffuseur de gaz, l'angle $\beta$ étant compris entre 0 et 80 °, de préférence supérieur ou égal à 25° et inférieur ou égal à 75 °.
- la torche comprend des moyens de mise en communication fluidique du troisième passage de gaz avec l'extérieur de la torche.

Selon un autre aspect, l'invention porte également sur un procédé de coupage d'une pièce métallique au moyen d'un plasma d'arc électrique généré par une torche selon l'invention, ladite pièce métallique étant formée de préférence d'acier doux.

L'invention va maintenant être mieux comprise grâce à la description détaillée suivante faite en références aux Figures annexées parmi lesquelles :

- la Figure 1 est une vue en coupe longitudinale d'une torche à plasma d'arc selon l'invention,
- les Figures 2a et 2b sont, respectivement, des vues en coupe transversale d'un premier diffuseur de gaz oxydant et d'un deuxième diffuseur de gaz non oxydant d'une torche à plasma d'arc selon l'invention,
- la Figure 3 est une vue schématique partielle d'une torche à plasma d'arc selon un premier mode de réalisation de l'invention,
- la Figure 4 est une vue schématique partielle d'une torche à plasma d'arc selon un second mode de réalisation de l'invention.

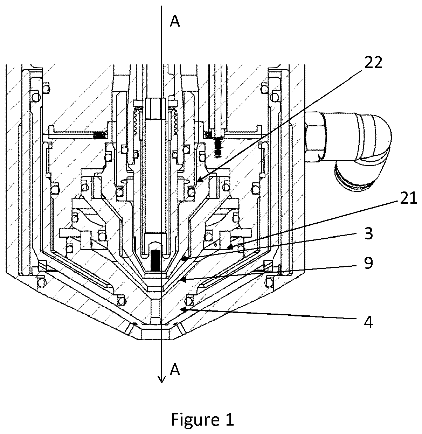

La Figure 1 schématise les principaux composants d'une torche à plasma d'arc d'axe longitudinal AA. Dans le cadre de l'invention, on définit les directions « amont » et « aval » en suivant la direction donnée par la flèche sur l'axe AA, qui suit le sens d'écoulement des gaz dans la torche.

La première phase d'un procédé de coupage par plasma d'arc consiste à amorcer l'arc électrique. L'électrode 3 et la première tuyère 4 sont reliées électriquement à un générateur de courant électrique. L'électrode 3, ou cathode, est directement reliée à la borne négative du générateur et la tuyère 4, ou anode, est initialement reliée à la borne positive du générateur de courant électrique via une impédance, généralement de quelques Ohms.

L'extrémité aval de l'électrode 3 est agencée dans la tuyère 4, qui est généralement une pièce de révolution comprenant un évidement axial.

La première tuyère 4 comprend en son extrémité aval un canal d'éjection 42 muni d'un premier orifice d'entrée 41. Le canal d'éjection 42 est avantageusement de forme cylindrique.

Selon l'invention, l'électrode 3 est formée au moins en partie de tungstène. En effet, comme expliqué précédemment, la durée de vie d'une électrode en tungstène est nettement supérieure à celle d'une électrode en hafnium ou en zirconium.

Avantageusement, l'électrode 3 comprend un corps de forme allongée formée d'un matériau présentant une conductivité thermique élevée tel le cuivre ou ses alliages. Un insert thermo-émissif 34 en tungstène, utilisé pur, allié ou dopé, de préférence dopé à l'oxyde de thorium ($ThO_2$), est alors agencé au niveau de l'extrémité aval de l'électrode 3. De façon alternative, l'électrode 3 peut être intégralement formée de tungstène. Dans les deux cas, l'électrode 3 présente en son extrémité aval une surface d'extrémité 33 formée au moins en partie de tungstène. En d'autres termes, au moins une partie de la surface d'extrémité 33 est thermo-émissive.

L'électrode 3 et la tuyère 4 définissant entre elles la chambre d'arc 10 qui correspond au volume compris entre la surface externe de l'électrode 3 et la surface interne de la tuyère 4.

Au cours de la phase d'amorçage, on alimente la chambre d'arc 10 en gaz plasmagène. Le flux de gaz plasmagène circule dans la chambre 10 jusqu'au canal 42 de la tuyère 4.

Un arc électrique est amorcé grâce à l'application d'une tension électrique continue comprise entre 300 et 500 V environ, correspondant à la tension à vide du générateur, à laquelle est superposée un potentiel électrique alternatif (de l'ordre de 6 à 15 kV) en haute fréquence (de l'ordre de 10 kHz) entre l'électrode 3 et la tuyère 4. Il se forme alors un arc électrique entre l'électrode 3 et la tuyère 4, appelé arc pilote, d'une intensité de l'ordre de 20 à 40 A. La tension résultante est de l'ordre de 20 à 60 V.

Dès que l'arc pilote est détecté par le générateur électrique, le potentiel électrique alternatif en haute fréquence est arrêté. Le gaz plasmagène introduit dans la chambre d'arc 10 est alors ionisé par l'arc pilote. De plus, dès sa formation, l'arc pilote est soufflé en dehors de la torche à plasma d'arc par un flux de gaz plasmagène alimentant la chambre d'arc 10, lequel arc est transféré à la pièce métallique à découper.

En fait, une augmentation du débit de gaz plasmagène circulant dans la chambre d'arc 10 permet de déplacer le pied de l'arc électrique situé au niveau de l'électrode et de le centrer au niveau de l'insert thermo-émissif 34. Le pied d'arc électrique situé au niveau de la surface interne de la tuyère est expulsé en dehors de la torche à plasma d'arc, par le canal de la tuyère, vers la pièce métallique à découper. Après transfert de l'arc électrique à la tôle, la phase de coupage débute. Le flux de gaz plasmagène traversant la chambre d'arc 10 est ionisé dans l'arc électrique établi entre l'électrode 3 et la pièce à découper.

Selon l'invention, la torche comprend des moyens d'alimentation en gaz oxydant 1.

Avantageusement, ces moyens d'alimentation comprennent un premier diffuseur 21 de gaz oxydant agencé en amont du premier passage de gaz 6.

En fait, le premier diffuseur 21 est agencé au niveau de l'extrémité amont de la tuyère 4, c'est-à-dire l'extrémité opposée à l'extrémité aval comprenant le canal de tuyère 42. Le premier diffuseur 21 est relié fluidiquement à la chambre d'arc 10 d'une part, et à au moins une source de gaz oxydant 1 d'autre part. On utilise avantageusement de l'oxygène en tant que gaz oxydant 1.

De préférence, le gaz oxydant 1 est distribué dans la chambre 10 via au moins un premier conduit de gaz, i. e. canal, rainure, ou analogue, traversant le premier diffuseur 21.

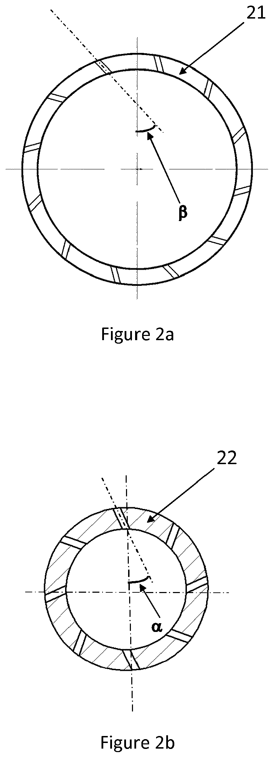

De façon avantageuse, le dit premier conduit du premier diffuseur 21 est usiné de façon à former un angle α avec l'axe de symétrie transverse du premier diffuseur 21, comme illustré sur la Figure 2a. Ledit au moins un premier conduit traverse le premier diffuseur 21 de part en part.

L'angle α est avantageusement compris entre 0 et 50°, de préférence supérieur ou égal à 5° et inférieur ou égal à 45°. Le fait de conférer aux conduits du premier diffuseur 21 un tel angle α permet d'augmenter la vitesse tangentielle du gaz oxydant à l'entrée du canal 42 de la tuyère 4, conférant ainsi une meilleure stabilité de l'arc électrique nécessaire à une bonne qualité de coupe. En particulier, plus l'angle α augmente, plus la vitesse tangentielle du gaz à l'entrée du canal 42 augmente et meilleur est la qualité de coupe.

Le nombre de conduits du premier diffuseur 21 est avantageusement égal ou supérieur à 3 afin de garantir une distribution homogène du flux de gaz oxydant à l'entrée du passage 6.Le gaz oxydant 1 est ensuite distribué dans la chambre d'arc 10 via un premier passage de gaz 6 agencé entre l'électrode 3 et la première tuyère 4.

Dans le cadre de l'invention, la torche comprend en outre des moyens d'alimentation en gaz non-oxydant 2. Avantageusement, ces moyens d'alimentation comprennent un deuxième diffuseur 22 de gaz non-oxydant 2 agencé en amont du deuxième passage de gaz 7.

En fait, le deuxième diffuseur 22 est agencé du côté de l'extrémité amont de l'électrode 3, c'est-à-dire l'extrémité opposée à l'extrémité aval où se forme l'arc électrique. Le deuxième diffuseur 22 est relié fluidiquement à la chambre d'arc 10 d'une part, et à au moins une source de gaz non-oxydant 2 d'autre part via au moins un deuxième conduit. Le gaz non-oxydant 2 comprend avantageusement de l'azote, un gaz neutre, tel que de l'argon ou encore de l'hélium, et/ou de l'hydrogène.

De façon avantageuse, ledit au moins un deuxième conduit du deuxième diffuseur 22 est conçu de façon à former un angle β avec l'axe de symétrie transverse du diffuseur 22, comme illustré sur la Figure 2b. Ledit au moins un deuxième conduit traverse le deuxième diffuseur 22 de part en part.

L'angle β est avantageusement compris entre 0 et 80°, de préférence supérieur ou égal à 25° et inférieur ou égal à 75°. Le fait de conférer aux conduits du deuxième diffuseur 22 de telles valeurs d'angles β permet de réduire le flux de chaleur sur les parois internes du troisième passage de gaz 8 et de réduire la quantité d'oxygène autour de l'électrode 3. En particulier, plus l'angle β diminue, plus le débit de gaz non-oxydant augmente pour une même pression d'alimentation en amont du diffuseur 2, et une augmentation du débit de gaz qui s'échappe par le passage de gaz 8. En outre, cette diminution de l'angle β conduit à une réduction de la quantité d'oxygène au niveau de la surface 33 de l'électrode qui diminue. De plus, une réduction de l'angle β conduit à une réduction du flux de chaleur sur les parois internes du troisième passage de gaz 8, due à l'augmentation du débit de gaz non-oxydant et du débit de gaz dans le passage 8.

Le nombre de conduits du deuxième diffuseur 22 est avantageusement égal ou supérieur à 3 afin de garantir une distribution homogène du flux de gaz non-oxydant autour de la partie centrale 31 de l'électrode.

Le gaz non-oxydant 2 est ensuite distribué dans la chambre d'arc 10 en amont du gaz oxydant 1 via un deuxième passage 7 aménagé au sein de l'électrode 3. Ceci permet de créer une atmosphère gazeuse non-oxydante autour de l'extrémité aval de l'électrode 3 et de protéger la partie thermo-émissive de l'électrode 3 du flux de gaz oxydant 1 alimentant également la chambre d'arc 10.

Selon l'invention, la torche comprend en outre un troisième passage de gaz 8 agencé entre le premier passage de gaz 6 et le deuxième passage de gaz 7 et permettant d'évacuer hors de la chambre d'arc 10 le gaz non-oxydant 2 distribué par le deuxième passage 7. Le troisième passage de gaz 8 est relié fluidiquement avec l'extérieur de la torche, avantageusement via un conduit d'évacuation muni d'un orifice calibré. Le diamètre de l'orifice calibré est de l'ordre de

400 à 900 μm, typiquement autour de 650 μm. Du fait d'une pression dans la chambre d'arc supérieure à la pression atmosphérique, typiquement de l'ordre de 2 à 7 bar, le gaz non-oxydant 2 est évacué hors de la torche avec un débit contrôlé sans qu'il ne soit nécessaire d'utiliser un système de purge.

On réduit ainsi la quantité de gaz non-oxydant 2 pouvant circuler jusque dans le canal d'éjection 42 de la tuyère 4, de sorte que le flux de gaz plasmagène distribué par la tuyère 4 se compose majoritairement de gaz oxydant 1, avantageusement d'au moins 70 % de gaz oxydant 1, de préférence d'au moins 80 % de gaz oxydant 1.

La présente invention permet donc d'utiliser une torche à électrode en tungstène dans un procédé de coupage d'une pièce en acier doux mettant en oeuvre un gaz plasmagène suffisamment oxydant pour garantir de bonnes performances de coupe.

De plus, le fait d'aménager le deuxième passage de gaz 7 au sein de l'électrode 3 évite l'ajout d'un composant supplémentaire dans la torche, ce qui rend sa structure plus simple et évite d'augmenter excessivement la distance entre la première tuyère 4 et l'électrode 3 et offre une meilleure protection du tungstène par le gaz non-oxydant issu du deuxième passage 7. De plus, un tel aménagement permet de garder une tolérance très précise sur les dimensions géométriques de la torche, et en particulier la concentricité de la paroi périphérique 32 et de la partie centrale 31 de l'électrode 3.

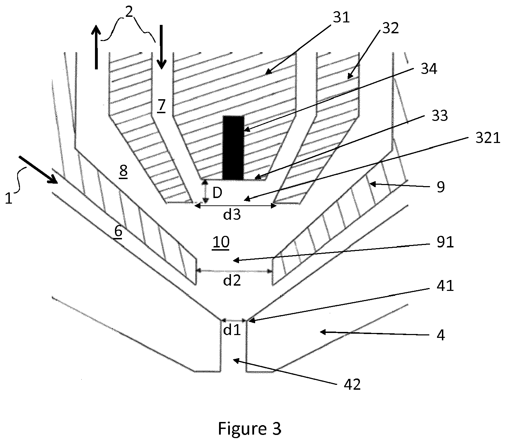

Selon le premier mode de réalisation illustré sur la Figure 3, l'électrode 3 comprend une partie centrale 31 et une paroi périphérique 32 formant manchon autour de ladite partie centrale 31. De préférence, la partie centrale 31 et la paroi périphérique 32 sont formées d'une même pièce. De façon alternative, la partie centrale 31 et la paroi périphérique 32 peuvent être deux pièces distinctes assemblées l'une à l'autre.

Avantageusement, la surface d'extrémité 33 est située sur la partie centrale 31 de l'électrode 3. De préférence, la surface thermo-émissive 33 est plane. Ceci limite la perturbation de l'arc électrique par le flux de gaz non-oxydant 2 distribué par le deuxième passage 7. Lorsqu'un insert thermo-émissif en tungstène est agencé à l'extrémité de l'électrode 3, sa surface est coplanaire avec la surface d'extrémité 33.

Le deuxième passage de gaz 7 est délimité par la partie centrale 31 et la paroi périphérique 32. Dit autrement, le deuxième passage de gaz 7 est défini entre la surface externe de la partie centrale 31 et la surface interne de la paroi périphérique 32.

Avantageusement, le deuxième passage de gaz 7 est agencé tout autour de la partie centrale 31, sa section transverse étant alors de forme annulaire.

Selon un mode préféré de réalisation, la paroi périphérique 32 de l'électrode 3 s'étend dans la chambre d'arc 10 en formant saillie par rapport à la partie centrale 31 de l'électrode 3. En fait, comme illustré sur la Figure 1, la paroi périphérique 32 s'étend au-delà de la partie centrale 31 dans la chambre d'arc 10, en suivant la direction AA.

De cette façon, la paroi périphérique 32 est conformée pour guider le gaz non-oxydant 2 au-delà de la surface d'extrémité 33 de l'électrode 3. Ceci permet d'améliorer encore la protection de l'électrode 3, en favorisant la formation d'une couche de gaz non-oxydant 2 dans la partie de la chambre d'arc située sous l'électrode 3, et en limitant les remontées de gaz oxydant 1 vers l'électrode 3.

Avantageusement, le guidage du gaz non-oxydant est réalisé le long d'une portion de la surface interne de la paroi périphérique 32 qui s'étend sur une distance D non-nulle au-delà de la surface d'extrémité 33 de l'électrode 3, de préférence une distance D d'au moins 0,5 mm, de préférence encore une distance D inférieur à 3 mm.

Le fait que la paroi périphérique 32 forme saillie dans la chambre d'arc 10 permet également de former une couche de gaz non-oxydant 2 au voisinage de l'électrode, tout en facilitant la redirection du gaz non-oxydant 2 vers le troisième passage de gaz 8, ce qui limite la quantité de gaz non-oxydant 2 introduit dans le canal 42 de la tuyère 4.

Selon un mode particulier de réalisation de l'invention, la torche peut comprendre une deuxième tuyère 9 agencée entre l'électrode 3 et la première tuyère 4, le premier passage de gaz 6 étant délimité par la première tuyère 4 et la deuxième tuyère 9 et le troisième passage de gaz 8 étant délimité par l'électrode 3 et la deuxième tuyère 9.

Les première et deuxième tuyères 4, 9 peuvent être formées d'une même pièce ou, de façon alternative, peuvent être deux pièces distinctes, en particulier deux pièces distinctes assemblées l'une à l'autre.

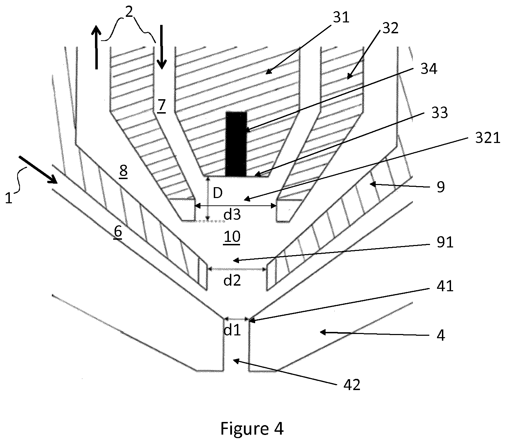

De préférence, la première tuyère 4 comprend un premier orifice 41 de sortie de gaz ayant un premier diamètre d1 et la deuxième tuyère 9 comprend un deuxième orifice 91 ayant un deuxième diamètre d2 supérieur au premier diamètre d1 dudit premier orifice 41. Selon les modes de réalisation illustrés en Figures 3 et 4, la paroi périphérique 32 comprend un troisième orifice 321 ayant un troisième diamètre d3 et débouchant entre la surface d'extrémité 33 et le deuxième orifice 91.

Avantageusement, ledit deuxième diamètre d2 est inférieur audit troisième diamètre d3. De la sorte, on augmente l'avancée de la paroi de la deuxième tuyère 9 dans la chambre d'arc 10, comme on le voit en comparant les Figures 3 et 4. Cette avancée de la deuxième tuyère 9 en regard du flux de gaz non-oxydant distribué par l'orifice 321 assure une redirection plus efficace du flux de gaz non-oxydant 2 vers le troisième passage 8. En outre, il s'ensuit une réduction de la quantité de gaz oxydant 1 remontant vers l'électrode 3, grâce à un meilleur guidage du flux de gaz oxydant 1 en provenance du premier passage 6 vers le canal 42.

De préférence, le deuxième diamètre d2 est inférieur au troisième diamètre d3 d'un facteur compris entre 0,5 et 0,95, de préférence le deuxième diamètre d2 est compris entre 3 et 4,5 mm.

Ces valeurs conduisent à un bon compromis entre un guidage plus efficace du flux de gaz non-oxydant 2 quand d2 diminue et un contrôle du flux de chaleur absorbé par la deuxième tuyère 9 du fait de sa plus grande proximité avec l'arc électrique quand d2 diminue.

Afin de démontrer l'efficacité de l'invention, des simulations ont été réalisées pour déterminer les concentrations en gaz oxydant 1 et en gaz non oxydant 2 en différents points de la chambre d'arc 10 d'une torche réalisée selon l'invention. Le gaz oxydant 1 était de l'oxygène et le gaz non oxydant 2 était de l'azote.

En fait, les débits de gaz non-oxydant 2 et oxydant 1 alimentant la chambre d'arc ainsi que les concentrations en gaz non-oxydant 2 et en gaz oxydant 1 dans les différentes zones de la chambre d'arc 10 peuvent être ajustées en dimensionnant notamment la distance D sur laquelle la paroi périphérique 32 fait saillie dans la chambre d'arc 10 et le deuxième diamètre d2 du deuxième orifice 91 de la deuxième tuyère 9.

Selon le mode de réalisation illustré sur la Figure 3, la paroi périphérique 32 forme saillie d'une distance D de 0.5 mm par rapport à la surface d'extrémité 33. Dans ce cas, le deuxième diamètre d2 du deuxième orifice 91 est ajusté à une valeur de l'ordre de 4.7 mm.

La Figure 4 illustre un second mode de réalisation de l'invention dans lequel la paroi périphérique 32 forme saillie d'une distance D égale à 1.6 mm dans la chambre d'arc 10. Le deuxième diamètre d2 du deuxième orifice 91 est réduit à une valeur de 3.7 mm.

A conditions d'alimentation en gaz identiques, à savoir une pression d'azote à l'entrée du deuxième passage 7 de 5.8 bar, un débit d'oxygène de 20 Nlpm dans le premier passage 6 et une pression de 5.78 bar dans le troisième passage de gaz 8, l'utilisation d'une torche selon la Figure 4 conduit à une concentration en oxygène à l'extrémité aval de l'électrode 3, i. e. au voisinage de la surface d'extrémité 33, de l'ordre de 0.0002 % (% en masse), alors que l'utilisation d'une torche selon la Figure 3 conduit à une concentration en oxygène à l'extrémité aval de l'électrode 3 de l'ordre de 0.06 % (% en masse), la concentration d'oxygène dans le flux de gaz en sortie de la première tuyère 4 étant dans les deux cas de l'ordre de 80 % (% en masse).

En fait, augmenter la distance de saillie de la paroi périphérique 32 permet de guider le gaz non-oxydant plus en aval de la chambre d'arc 10, et ainsi d'améliorer encore la protection de l'électrode vis-à-vis des remontées de gaz oxydant en provenance du premier passage 6. A noter que lorsque la distance D de saillie de la paroi périphérique 32 augmente, il est préférable de réduire le deuxième diamètre d2 du deuxième orifice 91, comme illustré sur la Figure 4, afin de limiter l'incorporation de gaz non-oxydant 2 dans le flux de gaz plasmagène éjecté par la première tuyère 4.

Par ailleurs, en considérant la configuration selon la Figure 3, il a été constaté qu'une réduction du débit d'alimentation de la torche en gaz non-oxydant par le deuxième passage de 35% et une réduction du débit d'évacuation du gaz non-oxydant par le troisième passage conduisait à réduire la concentration en oxygène en aval de l'électrode 3 de 0.06 % à 0.042 % (% massique). Cependant, ceci s'accompagnait d'une augmentation du flux de chaleur de 7 % au niveau de la paroi interne du canal d'éjection de la première tuyère 4.

Le flux de chaleur (exprimé en Watt) au niveau des différents composants de la torche doit aussi être pris en compte pour évaluer les performances de la torche selon l'invention. En effet un échauffement excessif peut conduire à la dégradation des performances de coupe, voire à la destruction de ces composants. En particulier, une donnée importante à prendre en compte est le flux de chaleur absorbé par la deuxième tuyère 9 du fait de son avancée dans la chambre 10 et de sa proximité avec la colonne d'arc (en particulier au niveau de la surface interne de la deuxième tuyère 9 délimitant une partie du troisième passage 8.

A titre illustratif, les Tableaux 1 et 2 ci-dessous présentent des résultats de simulations menées avec la configuration selon la Figure 4 en faisant varier les paramètres suivants :

- pression d'alimentation de la torche en azote (P7), exprimée en bar et mesurée en amont du diffuseur de gaz 21.
- débit massique d'alimentation de la torche en azote (D7), exprimé en normaux litres par minute (Nlpm) et déterminé en amont du diffuseur de gaz 21.
- débit massique d'alimentation de la torche en oxygène (D6), exprimé en normaux litres par minute (Nlpm) et déterminé en amont du premier passage 6, au niveau du premier diffuseur 21,
- pression d'évacuation de l'azote (P8), mesurée au niveau du troisième passage 8,
- concentration d'oxygène en sortie de la première tuyère 4 (C4), exprimée en % en masse,
- concentration d'oxygène à l'extrémité de l'électrode 3 (C3), exprimée en % en masse et mesurée au niveau de la surface d'extrémité 33,
- flux de chaleur sur la paroi de la deuxième tuyère 9 formant le troisième passage 8 (F), exprimé et indiquant l'énergie par unité de temps reçue par la tuyère 9 du fait de son avancée dans la chambre 10 et de sa proximité avec la colonne d'arc.

Les résultats du Tableau 2 illustrent, toujours dans la configuration de torche selon la Figure 4, l'effet d'une variation de la pression d'évacuation du gaz non-oxydant 2 dans le troisième passage 8 sur la concentration d'oxygène à l'extrémité aval de l'électrode 3. On constate qu'augmenter la pression dans le troisième passage 8 entraîne une réduction de la concentration en oxygène au voisinage de l'extrémité aval de l'électrode 3, du fait de la réduction du débit d'évacuation du gaz non-oxydant 2 que cela entraîne. En outre, comme l'azote est distribué à pression constante P7, une augmentation de la pression d'évacuation P8 entraîne une réduction du débit d'azote évacué

Tableau 1

| β [°] | α [°] | P7 [bar] | D6 [Nlpm] | P8 [bar] | C4 [% en masse] | C3 [% en masse] | F [W] |
|---|---|---|---|---|---|---|---|
| 56 | 9 | 5,8 | 20 | 5,78 | 80,4 | 0,00022 | 219 |
| 56 | 20 | 5,8 | 20 | 5,78 | 80,5 | 0,00024 | 219 |
| 56 | 45 | 5,8 | 20 | 5,78 | 80,6 | 0,00026 | 220 |
| 75 | 9 | 5,8 | 20 | 5,78 | 80,7 | 0,00029 | 224 |
| 50 | 9 | 5,8 | 20 | 5,78 | 80,4 | 0,00019 | 215 |
| 25 | 9 | 5,8 | 20 | 5,78 | 79,7 | 0,00013 | 164 |
| 0 | 9 | 5,8 | 20 | 5,78 | 79,7 | 0,00015 | 139 |
| 25 | 45 | 5,8 | 20 | 5,78 | 79,9 | 0,000079 | 167 |

Tableau 2

| β [°] | α [°] | P7 [bar] | D6 [Nlpm] | P8 [bar] | C4 [% en masse] | C3 [% en masse] | F [W] |
|---|---|---|---|---|---|---|---|
| 56 | 9 | 5,8 | 20 | 5,78 | 80,4 | 0,00022 | 219 |
| 56 | 9 | 5,8 | 20 | 5,74 | 80,4 | 0,00039 | 227 |
| 56 | 9 | 5,8 | 20 | 5,70 | 80,4 | 0,00041% | 242 |

Les résultats du Tableau 3 illustrent, toujours dans la configuration de torche selon la Figure 4, l'effet d'une variation du deuxième diamètre d2. On constate que réduire la valeur du deuxième diamètre d2, de 4,7 à 3,9 mm, entraîne une réduction de plusieurs ordres de grandeur de la concentration en oxygène au voisinage de l'extrémité aval de l'électrode 3, du fait de l'augmentation du débit de gaz non-oxydant D7, ainsi que de la meilleur orientation du gaz oxydant (oxygène) vers l'entrée du canal 42.

Tableau 3

| d2 [mm] | P7 [bar] | D7 [Nlpm] | D6 [Nlpm] | P8 [bar] | C4 [% en masse] | C3 [% en masse] |
|---|---|---|---|---|---|---|
| 4,7 | 5,4 | 30,8 | 20 | 5,38 | 88,7 | 0,047 |
| 3,9 | 5,4 | 32,3 | 20 | 5,38 | 82.4 | 0,0000003 |

Les résultats du Tableau 4 illustrent, toujours dans la configuration de torche selon la Figure 4, l'effet d'une variation de la distance de saillie D. On constate que augmenter la valeur de la distance de saillie D entraîne une réduction importante de la concentration en oxygène au voisinage de l'extrémité aval de l'électrode 3, du fait du meilleur guidage de ce gaz non-oxydant vers le passage 7, empêchant la remontée vers l'électrode de l'oxygène introduit en aval dans la chambre d'arc 10. A noter le flux de chaleur plus important dans le cas de la plus grande valeur de la distance de saillie D due à la réduction du diamètre d2 afin de limiter l'incorporation de gaz non-oxydant 2 dans le flux de gaz plasmagène éjecté par la première tuyère 4.

Tableau 4

| d2 [mm] | D [mm] | P7 [bar] | D6 [Nlpm] | P8 [bar] | C4 [% en masse] | C3 [% en masse] | F [W] |
|---|---|---|---|---|---|---|---|
| 4.7 | 0,5 | 5.8 | 20 | 5,79 | 82.8 | 0,042 | 165 |
| 4.2 | 1,6 | 5.8 | 20 | 5,79 | 80.4 | 0.00021 | 221 |

Il est à noter que les meilleures configurations sont celles qui permettent de réduire au minimum la concentration d'oxygène à l'extrémité de l'électrode et de garder le flux de chaleur sur la paroi de la deuxième tuyère 9 formant le troisième passage 8 le plus faible possible. Au vu des résultats ci-dessus, il est ainsi particulièrement avantageux d'utiliser un deuxième diffuseur 22 ayant un ou plusieurs conduits de fluide d'angle β inférieur à 50°. Un exemple avantageux de réalisation est une distance de saillie D de 1,6 mm et un deuxième diamètre d2 de 3,9 mm.

L'application principale de la présente invention est un procédé de coupage par plasma d'arc en acier doux. Le procédé offre des performances de coupe optimales grâce à l'utilisation d'un gaz de coupe, i. e. un gaz plasmagène, composé majoritairement de gaz non-oxydant, et ce sur une durée plus importante grâce à l'utilisation d'une électrode en tungstène protégée efficacement par un flux de gaz non-oxydant.

## Revendications

1. Torche à plasma d'arc comprenant :

   - des moyens d'alimentation en gaz oxydant (1),
   - des moyens d'alimentation en gaz non-oxydant (2),
   - une électrode (3) et une première tuyère (4) délimitant une chambre d'arc (10), l'électrode (3) étant formée au moins en partie de tungstène,
   - un premier passage de gaz (6) agencé entre l'électrode (3) et la première tuyère (4) et permettant de distribuer le gaz oxydant (1) dans la chambre d'arc (10),
   - un deuxième passage de gaz (7) permettant de distribuer, en amont du premier passage de gaz (6), le gaz non-oxydant dans la chambre d'arc (10)
   - un troisième passage de gaz (8) agencé entre le premier passage de gaz (6) et le deuxième passage de gaz (7) et permettant d'évacuer le gaz non-oxydant (2) hors de la chambre d'arc (10),

   **caractérisée en ce que** le deuxième passage de gaz (7) est aménagé au sein de l'électrode (3).

2. Torche selon la revendication 1, **caractérisée en ce que** l'électrode (3) comprend une partie centrale (31) et une paroi périphérique (32) formant manchon autour de ladite partie centrale (31), la partie centrale (31) et la paroi périphérique (32) délimitant le deuxième passage de gaz (7).

3. Torche selon la revendication 2, **caractérisée en ce que** la partie centrale (31) et la paroi périphérique (32) sont formées d'une même pièce.

4. Torche selon l'une des revendications précédentes, **caractérisée en ce qu'**elle comprend une deuxième tuyère (9) agencée entre l'électrode (3) et la première tuyère (4), le premier passage de gaz (6) étant délimité par la première tuyère (4) et la deuxième tuyère (9) et le troisième passage de gaz (8) étant délimité par l'électrode (3) et la deuxième tuyère (9).

5. Torche selon l'une des revendications 2 à 4, **caractérisée en ce que** la partie centrale (31) de l'électrode (3) comprend une surface d'extrémité (33) agencée en regard de la première tuyère (4), la surface d'extrémité (33) étant formée au moins en partie de tungstène.

6. Torche selon la revendication 5, **caractérisée en ce que** la paroi périphérique (32) de l'électrode (3) s'étend dans la chambre d'arc (10) en formant saillie par rapport à la surface d'extrémité (33) de l'électrode (3).

7. Torche selon la revendication 6, **caractérisée en ce que** la paroi périphérique (32) de l'électrode (3) forme saillie d'une distance (D) comprise entre 0.5 et 3 mm par rapport à la surface d'extrémité (33) de l'électrode (3).

8. Torche selon l'une des revendications 4 à 7, **caractérisé en ce que** la première tuyère (4) comprend un premier orifice (41) d'entrée de gaz ayant un premier diamètre, la deuxième tuyère (9) comprend un deuxième orifice (91) ayant un deuxième diamètre (d2) et la paroi périphérique (32) comprend un troisième orifice (321) ayant un troisième diamètre (d3) et débouchant entre la surface d'extrémité (33) et le deuxième orifice (91), ledit deuxième diamètre (d2) étant inférieur audit troisième diamètre (d3).

9. Torche selon la revendication précédente, **caractérisée en ce que** ledit deuxième diamètre (d2) est inférieur au troisième diamètre (d3) d'un facteur compris entre 0,5 et 0,95, de préférence le deuxième diamètre (d2) est compris entre 3 et 4,5 mm.

**10.** Torche selon l'une des revendications précédentes, **caractérisée en ce que** les moyens d'alimentation en gaz oxydant (1) comprennent un premier diffuseur de gaz (21) agencé en amont du premier passage de gaz (6).

**11.** Torche selon la revendication précédente, **caractérisée en ce que** le premier diffuseur de gaz (21) est traversé par au moins un premier conduit formant un angle $\alpha$ avec l'axe de symétrie transverse dudit premier diffuseur de gaz (21), l'angle $\alpha$ étant compris entre 0 et 50 °, de préférence supérieur ou égal à 5° et inférieur ou égal à 45°.

**12.** Torche selon l'une des revendications précédentes, **caractérisée en ce que** les moyens d'alimentation en gaz non-oxydant (2) comprennent un deuxième diffuseur de gaz (22) agencé en amont du deuxième passage de gaz (7).

**13.** Torche selon la revendication précédente, **caractérisée en ce que** le deuxième diffuseur de gaz (22) est traversé par au moins un deuxième conduit formant un angle $\beta$ avec l'axe de symétrie transverse dudit deuxième diffuseur de gaz (22), l'angle $\beta$ étant compris entre 0 et 80°, de préférence supérieur ou égal à 25° et inférieur ou égal à 75°.

**14.** Torche selon l'une des revendications précédentes, **caractérisée en ce qu'**elle comprend des moyens de mise en communication fluidique du troisième passage de gaz (8) avec l'extérieur de la torche.

**15.** Procédé de coupage d'une pièce métallique au moyen d'un jet de plasma d'arc généré par une torche selon l'une des revendications précédentes, ladite pièce métallique étant formée de préférence d'acier doux.


**Patentansprüche**

**1.** Lichtbogenplasmabrenner, umfassend:

- Mittel zum Zuführen von oxidierendem Gas (1),
- Mittel zum Zuführen von nichtoxidierendem Gas (2),
- eine Elektrode (3) und eine erste Düse (4), die eine Lichtbogenkammer (10) begrenzen, wobei die Elektrode (3) mindestens teilweise aus Wolfram gebildet ist,
- einen ersten Gasdurchgang (6), der zwischen der Elektrode (3) und der ersten Düse (4) angeordnet ist und ermöglicht, das oxidierende Gas (1) in der Lichtbogenkammer (10) zu verteilen,
- einen zweiten Gasdurchgang (7), der ermöglicht, das nichtoxidierende Gas vorgelagert vor dem ersten Gasdurchgang (6) in der Lichtbogenkammer (10) zu verteilen,
- einen dritten Gasdurchgang (8), der zwischen dem ersten Gasdurchgang (6) und dem zweiten Gasdurchgang (7) angeordnet ist und ermöglicht, das nichtoxidierende Gas (2) aus der Lichtbogenkammer (10) abzuführen,

**dadurch gekennzeichnet, dass** der zweite Gasdurchgang (7) in der Elektrode (3) ausgebildet ist.

**2.** Brenner nach Anspruch 1, **dadurch gekennzeichnet, dass** die Elektrode (3) einen zentralen Teil (31) und eine Umfangswand (32) aufweist, die um den zentralen Teil (31) herum eine Muffe bildet, wobei der zentrale Teil (31) und die Umfangswand (32) den zweiten Gasdurchgang (7) begrenzen.

**3.** Brenner nach Anspruch 2, **dadurch gekennzeichnet, dass** der zentrale Teil (31) und die Umfangswand (32) aus einem gleichen Stück gebildet sind.

**4.** Brenner nach einem der vorhergehenden Ansprüche, **dadurch gekennzeichnet, dass** er eine zweite Düse (9) aufweist, die zwischen der Elektrode (3) und der ersten Düse (4) ausgebildet ist, wobei der erste Gasdurchgang (6) durch die erste Düse (4) und die zweite Düse (9) begrenzt ist, und wobei der dritte Gasdurchgang (8) durch die Elektrode (3) und die zweite Düse (9) begrenzt ist.

**5.** Brenner nach einem der Ansprüche 2 bis 4, **dadurch gekennzeichnet, dass** der zentralen Teil (31) der Elektrode (3) eine Endfläche (33) aufweist, die gegenüberliegend von der ersten Düse (4) ausgebildet ist, wobei die Endfläche (33) mindestens teilweise aus Wolfram gebildet ist.

**6.** Brenner nach Anspruch 5, **dadurch gekennzeichnet, dass** sich die Umfangswand (32) der Elektrode (3) in der Lichtbogenkammer (10) erstreckt, indem sie bezüglich der Endfläche (33) der Elektrode (3) vorsteht.

7. Brenner nach Anspruch 6, **dadurch gekennzeichnet, dass** sich die Umfangswand (32) der Elektrode (3) um einen Abstand (D), der zwischen 0,5 und 3 mm beträgt, bezüglich der Endfläche (33) der Elektrode (3) vorsteht.

8. Brenner nach einem der Ansprüche 4 bis 7, **dadurch gekennzeichnet, dass** die erste Düse (4) einen erste Gaseinlassöffnung (41) aufweist, die einen ersten Durchmesser aufweist, die zweite Düse (9) eine zweite Öffnung (91) aufweist, die einen zweiten Durchmesser (d2) aufweist, und die Umfangswand (32) eine dritte Öffnung (321) aufweist, die einen dritten Durchmesser (d3) aufweist und zwischen der Endfläche (33) und der zweiten Öffnung (91) mündet, wobei der zweite Durchmesser (d2) kleiner ist als der dritte Durchmesser (d3) ist.

9. Brenner nach dem vorhergehenden Anspruch, **dadurch gekennzeichnet, dass** der zweite Durchmesser (d2) um einen Faktor, der zwischen 0,5 und 0,95 beträgt, kleiner als der dritte Durchmesser (d3) ist, vorzugsweise der zweite Durchmesser (d2) zwischen 3 und 4,5 mm beträgt.

10. Brenner nach einem der vorhergehenden Ansprüche, **dadurch gekennzeichnet, dass** die Mittel zum Zuführen von oxidierendem Gas (1) einen ersten Gasverteiler (21) aufweisen, der vorgelagert vor dem ersten Gasdurchgang (6) ausgebildet ist.

11. Brenner nach dem vorhergehenden Anspruch, **dadurch gekennzeichnet, dass** der erste Gasverteiler (21) von mindestens einer ersten Leitung durchquert ist, die einen Winkel $\alpha$ mit der Quersymmetrieachse des ersten Gasverteilers (21) bildet, wobei der Winkel $\alpha$ zwischen 0 und 50° beträgt, vorzugsweise größer oder gleich 5° und kleiner oder gleich 45° ist.

12. Brenner nach einem der vorhergehenden Ansprüche, **dadurch gekennzeichnet, dass** die Mittel zum Zuführen von nichtoxidierendem Gas (2) einen zweiten Gasverteiler (22) aufweisen, der vorgelagert vor dem zweiten Gasdurchgang (7) ausgebildet ist.

13. Brenner nach dem vorhergehenden Anspruch, **dadurch gekennzeichnet, dass** der zweite Gasverteiler (22) von mindestens einer zweiten Leitung durchquert ist, die einen Winkel $\beta$ mit der Quersymmetrieachse des zweiten Gasverteilers (22) bildet, wobei der Winkel $\beta$ zwischen 0 und 80° beträgt, vorzugsweise größer oder gleich 25° und kleiner oder gleich 75° ist.

14. Brenner nach einem der vorhergehenden Ansprüche, **dadurch gekennzeichnet, dass** er Mittel zum Fluidverbinden des dritten Gasdurchgangs (8) mit der Außenseite des Brenners aufweist.

15. Verfahren zum Schneiden eines metallischen Werkstücks mittels eines Plasmalichtbogenstrahls, der durch einen Brenner nach einem der vorhergehenden Ansprüche erzeugt wird, wobei das metallische Werkstück vorzugsweise aus Weichstahl gebildet ist.

**Claims**

1. A plasma arc torch comprising:

   - means for feeding oxidising gas (1),
   - means for feeding non-oxidising gas (2),
   - an electrode (3) and a first nozzle (4) delimiting an arc chamber (10), the electrode (3) being made at least in part of tungsten,
   - a first gas passage (6) disposed between the electrode (3) and the first nozzle (4) and making it possible to distribute the oxidising gas (1) in the arc chamber (10),
   - a second gas passage (7) making it possible to distribute the non-oxidising gas in the arc chamber (10), upstream of the first gas passage (6),
   - a third gas passage (8), disposed between the first gas passage (6) and the second gas passage (7) and making it possible to evacuate the non-oxidising gas (2) outside the arc chamber (10),

   **characterised in that** the second gas passage (7) is disposed within the electrode (3).

2. The torch according to claim 1, **characterised in that** the electrode (3) comprises a central portion (31) and a peripheral wall (32) forming a sleeve around said central portion (31), the central portion (31) and the peripheral wall (32) delimiting the second gas passage (7) .

3. The torch according to claim 2, **characterised in that** the central portion (31) and the peripheral wall (32) are formed from the same part.

4. The torch according to any one of the preceding claims, **characterised in that** it comprises a second nozzle (9) disposed between the electrode (3) and the first nozzle (4), the first gas passage (6) being delimited by the first nozzle (4) and the second nozzle (9) and the third gas passage (8) being delimited by the electrode (3) and the second nozzle (9) .

5. The torch according to any one of claims 2 to 4, **characterised in that** the central portion (31) of the electrode (3) comprises an end surface (33) disposed facing the first nozzle (4), the end surface (33) being made at least in part of tungsten.

6. The torch according to claim 5, **characterised in that** the peripheral wall (32) of the electrode (3) extends in the arc chamber (10), protruding relative to the end surface (33) of the electrode (3).

7. The torch according to claim 6, **characterised in that** the peripheral wall (32) of the electrode (3) protrudes by a distance (D) between 0.5 and 3 mm relative to the end surface (33) of the electrode (3).

8. The torch according to any one of claims 4 to 7, **characterised in that** the first nozzle (4) comprises a first gas entry orifice (41) having a first diameter, the second nozzle (9) comprises a second orifice (91) having a second diameter (d2), and the peripheral wall (32) comprises a third orifice (321) having a third diameter (d3) and opening out between the end surface (33) and the second orifice (91), said second diameter (d2) being smaller than said third diameter (d3).

9. The torch according to the preceding claim, **characterised in that** said second diameter (d2) is smaller than the third diameter (d3) by a factor between 0.5 and 0.95, the second diameter (d2) preferably being between 3 and 4.5 mm.

10. The torch according to any one of the preceding claims, **characterised in that** the means for feeding oxidising gas (1) comprise a first gas diffuser (21) disposed upstream of the first gas passage (6).

11. The torch according to the preceding claim, **characterised in that** the first gas diffuser (21) is traversed by at least a first conduit forming an angle $\alpha$ with the transverse axis of symmetry of said first gas diffuser (21), the angle $\alpha$ being between 0 and 50°, preferably greater than or equal to 5° and smaller than or equal to 45°.

12. The torch according to any one of the preceding claims, **characterised in that** the means for feeding non-oxidising gas (2) comprise a second gas diffuser (22) disposed upstream of the second gas passage (7).

13. The torch according to the preceding claim, **characterised in that** the second gas diffuser (22) is traversed by at least one second conduit forming an angle $\beta$ with the transverse axis of symmetry of said second gas diffuser (22), the angle $\beta$ being between 0 and 80°, preferably greater than or equal to 25° and smaller than or equal to 75°.

14. The torch according to one of the preceding claims, **characterised in that** it comprises means for placing the third gas passage (8) in fluid communication with the environment outside the torch.

15. A method for cutting a metal part by means of an arc plasma jet produced by a torch according to any one of the preceding claims, said metal part being made preferably of mild steel.

Figure 1

EP 3 174 373 B1

Figure 2a

Figure 2b

14

Figure 3

Figure 4

**EP 3 174 373 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4163891 A
- EP 0114521 A
- WO 9953734 A